# EUROPÄISCHE PATENTSCHRIFT

(11) **EP 2 271 449 B1**
(45) Veröffentlichungstag und Bekanntmachung des Hinweises auf die Patenterteilung: **16.11.2011**
(21) Anmeldenummer: 08802560.6
(22) Anmeldetag: 24.09.2008
(51) Int. Cl.: B21K 1/70, F16B 39/38

(54) **SCHRAUBMUTTER, VERFAHREN UND WERKZEUG ZU IHERER HERSTELLUNG**
THREADED NUT, METHOD AND TOOL FOR PRODUCING THE SAME
ECROU, PROCÉDÉ ET OUTIL POUR SA PRODUCTION

(43) Veröffentlichungstag der Anmeldung: 12.01.2011
(73) Patentinhaber: Flaig, Hartmut, 78554 Aldingen (DE)
(72) Erfinder: Flaig, Hartmut, 78554 Aldingen (DE)
(74) Vertreter: Wagner, Kilian
(86) Internationale Anmeldenummer: PCT/EP2008/008083
(87) Internationale Veröffentlichungsnummer: WO 2010/034324

(56) Entgegenhaltungen:
- DE-A1- 2 557 130
- DE-A1-102005 062 045
- GB-A- 655 456
- US-A- 2 539 899
- US-A- 3 456 704

## Beschreibung

Die Erfindung betrifft eine Schraubmutter aus metallischem Werkstoff mit einer Gewindebohrung und einer deren Längsachse radial umlaufend zugeordneten Innennut nach dem Oberbegriff des Anspruchs 1. Zudem erfasst die Erfindung ein Verfahren zur Herstellung der Schraubmutter sowie ein dafür entwickeltes Werkzeug.

Eine Sicherungsmutter anderer Art ist aus dem deutschen Patent 3 05 761 zu entnehmen, wobei zur Ausbildung einer Sicherheitsmutter die Mutter mit einer ringförmigen Aushöhlung versehen wird, was durch ein Bohrgerät auf einer Werkzeugmaschine mit umlaufender Spindel erfolgt, wobei die Spindel mit einem Futter zum Halten der Muttern in Einzahl oder Mehrzahl während des Aushöhlens ausgerichtet ist. Die Höhlung wird gebildet, bevor das Gewinde eingeschnitten ist. Die Höhlung befindet sich in gleichem Abstand von beiden Endflächen der Mutter. Das Gewinde wird auf beiden Seiten der Höhlung mit gleicher Steigung geschnitten. Danach wird die Mutter einer Pressung ausgesetzt, um einen Versatz der Gewindeteile beidseits der Höhlung zueinander zu erreichen.

Auch das Schweizer Patent 2 49 469 gibt eine Sicherungsmutter an, die an ihrem entlasteten Ende mit einer Rille durch Abtrennen eines Teils des Gewindes versehen ist, so dass ein kreisringförmiger Lappen entsteht, welcher nach dem Hauptteil des Gewindes eingestaucht wird. Auch dadurch wird eine Sicherungsschraubmutter zur Verfügung gestellt.

Das deutsche Patent 4 90 889 beschreibt eine Sicherungswirkung einer Mutter, die dadurch erreicht wird, dass in der Gewindebohrung, bzw. im Kern der Mutter, eine Ringnut mit keilförmigem Querschnitt angebracht wird. Auch in diesem Fall wird im oberen Teil der Mutter das durchgehende Gewinde durch eine Aussparung unterbrochen, welche so gestaltet ist, dass dadurch eine dünne Wand erzeugt wird, so dass ein oberes Teilstück federnd wirkt. Danach wird das obere Teilstück durch Zusammenpressen im Durchmesser verengt und gleichzeitig in der Höhe zusammengedrückt, um eine Haftwirkung der Mutter zu erreichen. Das durch die Aussparung verbliebene dünne Wandstück erzeugt dabei eine federnde Wirkung auf den verengten und steigungsversetzten Flankendurchmesser des oberen Gewindeteils.

FR 2557652 A offenbart eine Schraubmutter aus metallischem Werkstoff mit einer Gewindebohrung und einer deren Längsachse radial umlaufend zugeordneten Innennut, wobei an eine der Stirnflächen der Schraubmutter ein Ringkragen angeformt und querschnittlich so achswärts gebogen ist, dass er mit einem die Gewindebohrung als Auflagefläche umgebenden Abschnitt jener Stirnfläche einen dieser unmittelbar zugeordneten Aufnahmeschlitz begrenzt. Diese Druckschrift offenbart auch ein Verfahren zum Herstellen einer Schraubmutter, wobei an einer Stirnfläche einer dem Grundriss der Schraubmutter entsprechenden Rohlingsmutter ein Ringkragen mit kreisförmiger freier Oberkante angeformt und durch ein axial an Letztere herangeführtes Druckwerkzeug zur Längsachse der Rohlingsmutter hin querschnittlich gekrümmt wird.

In US 2,363,680 ist eine Mutter anderer Art beschrieben, bei der ein Ringkragen umgeschlagen wird und an dessen nach innen weisender Seitenfläche ein Gewinde angebracht wird. Der umgeschlagene Teil des Ringkragens hat eine Wandstärke, welche größer als eine Wandstärke des gebogenen verbindenden Teils und des benachbarten, nicht umgeschlagenen Teils ist.

Betreffend die in FR 2 557 652 A und US 2,363,680 offenbarten Sicherungsmuttern hat sich gezeigt, dass deren Sicherungswirkung unzureichend ist, da es vor allem an einem verbreiterten Stirnbereich mangelt, weshalb keine ausreichende Zahl von Sicherungsgewindegängen im Stirnbereich anbringbar sind, so dass nur ein unzureichender Gewindegriff zur Sicherungswirkung erreichbar ist. Die in US 2,363,680 vorgeschlagene Lösung weist ebenfalls keinen verbreiterten Stirnbereich auf und der Lösung mangelt es im Übrigen an einer ausreichenden Federwirkung des umgeschlagenen Teils in axialer Richtung.

US 2,952,289 offenbart eine Mutter, bei der ein Ringkragen so weit umgebogen und anschließend axial gedrückt wird, bis er so nah wie möglich am freien Ende der Mutter positioniert ist.

US 2,385,390 offenbart eine Mutter mit einem Ringkragen, der Ausschnitte aufweist.

Auch der in US 2,952,289 und US 2,385,390 vorgeschlagenen Lösung mangelt es an einer ausreichenden Sicherungswirkung. Die durch Ausschnitte definierten Formkragenabschnitte der US 2,385,390 neigen zum Fressen an einer Schraube.

Diese und andere bekannte Muttern haben bezüglich ihrer Funktion erhebliche Nachteile - auch im Hinblick auf die aufwändige Fertigung, die spanend durch Entfernen eines Teils des Gewindes oder der Wände der Mutter erfolgen muss, um eine federnde Sicherungswirkung eines Gewindeteils zu erreichen.

Aus der DE 10 2005 062 045 A1 ist eine Schraubenmutter aus metallischem Werkstoffs gem. dem Oberbegriff des Anspruchs 1 bekannt.

Die US 2,539,899 A zeigt eine Schraubenmutter mit einem eine ebene Oberfläche aufweisenden Formkragen und in einer Umfangswand vorgesehenen Durchbrüchen.

Eine Schraubmutter der eingangs genannten Art ist in WO 2007/076968 A1 offenbart und behebt die vorgenannten Nachteile, ist jedoch noch verbesserungswürdig. In Kenntnis dieser Gegebenheiten hat sich der Erfinder das Ziel gesetzt, eine effizient einsetzbare und vor allem auf einfache sowie schnelle Weise herstellbare Schraubmutter verbesserter Art zu schaffen.

Zur Lösung dieser Aufgabe führt die Lehre des unabhängigen Anspruches; die Unteransprüche geben günstige Weiterbildungen an.

Bei der erfindungsgemäßen Schraubmutter ist an eine der Stirnflächen der Schraubmutter ein Ringkragen angeformt und querschnittlich so achswärts gebogen, dass er mit einem die Gewindebohrung als Auflagefläche umgebenden Abschnitt jener Stirnfläche einen dieser unmittelbar zugeordneten Aufnahmeschlitz begrenzt.

Nach einem weiteren Merkmal bildet der querschnittlich verformte Ringkragen der -- einen von Wandflächenabschnitten bestimmtem mehreckigem Grundriss aufweisenden -- Schraubmutter einen Formkragen, dessen Außenfläche in radialem Abstand zu den achsparallelen Kanten der Wandflächenabschnitte der Schraubmutter verläuft; der Aufnahmeschlitz ist dabei nahe der Außenfläche des Formkragens angeordnet sowie letzterer bevorzugt mit einer querschnittlich achswärts gekrümmten Außenfläche versehen.

Damit bildet der querschnittlich verformte Ringkragen einen Formkragen mit einem dem Aufnahmeschlitz benachbarten Stirnbereich und einer Außenfläche.

Weiter ist vorgesehen, dass der Formkragen an seiner Oberfläche, vorzugsweise wenigstens an seiner Außenfläche und/oder Innenfläche, in wenigstens einem umfänglich verlaufenden Abschnitt einen relativ zur übrigen Oberfläche, bzw. Außenfläche und/oder Innenfläche, versetzten Flächenverlauf aufweist. Unter einer Außenfläche des Formkragens wird dabei die dem Aufnahmeschlitz abgewandte Fläche des Formkragens verstanden, während unter der Innenfläche die dem Aufnahmeschlitz zugewandte Fläche des Formkragens verstanden wird. Der zur übrigen Außenfläche versetzte Flächenverlauf und/oder der zur übrigen Innenfläche versetzte Flächenverlauf des Formkragens führt gemäß dem Konzept der Erfindung dazu, dass beim achswärtigen Einbiegen des Ringkragens zur Bildung des Formkragens - trotz des geringer werdenden zur Verfügung stehenden Raumes - vermieden wird, dass sich das Material des Ringkragens unkontrolliert auffaltet, sondern vielmehr beim achswärtigen Einbiegevorgang ein vergleichsweise gleichmäßiges Einfalten des Materials im Bereich des wenigstens einen umfänglich verlaufenden Abschnitts erreicht wird.

Zum Erhalt der oben erläuterten hohen Sicherungswirkung ist ein möglichst gleichmäßiger Gewindeverlauf im Bereich des versetzten Gewindes vorteilhaft - es wird unter Erhaltung des guten Federspeichers des Formkragens und einer möglichst großflächigen Anlage des versetzten Gewindeganges an einer Schraube ein möglichst großer Reibschluss zwischen der Schraubmutter und der Schraube erreicht. Solche vorgesehenen Wirkungen würden durch ein unkontrolliertes Auffalten des Materials des Ringkragens zur Bildung des Formkragens beim axialen Einbiegen desselben in den geringer werdenden Innenraum der Schraubmutter nachteilig beeinflusst. Um diesem entgegenzuwirken, hat die Erfindung im Bereich des wenigstens einen umfänglich verlaufenden Abschnitts einen Raum zur Materialauffüllung zur Verfügung gestellt, indem dort an einer Oberfläche, insbesondere wenigstens an der Außenfläche und/oder Innenfläche, des Formkragens ein versetzter Flächenverlauf vorgesehen ist. Wie von der Erfindung erkannt, kann dadurch vor allem auch die Richtung und Menge der Materialauffaltung kontrolliert vorgegeben werden.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Nach einer besonders bevorzugten Weiterbildung der Erfindung ist der Stirnbereich breiter als der anschließende Querschnitt des Formkragens und der Stirnbereich trägt ein gegenüber einem übrigen Innengewinde versetztes Gewinde. Dies führt zu einer vergleichsweise groß ausgebildeten und gut greifenden versetzten Gewindefläche mit einem besonders vorteilhaft ausgestalteten Federspeicher des Formkragens, so dass die Schraubmutter mit einer gegenüber dem Stand der Technik vorteilhaften Sicherungswirkung versehen ist.

Gemäß einer besonders bevorzugten Weiterbildung ist der Flächenverlauf zum Aufnahmeschlitz hin versetzt. Grundsätzlich ist es auch möglich, insbesondere an der Innenfläche des Formkragens, den Flächenverlauf vom Aufnahmeschlitz weg zu versetzen. Vorteilhaft an der Außenfläche hat es sich als besonders wirksam erwiesen, den Flächenverlauf zum Aufnahmeschlitz hin zu versetzen. Dies führt zum einen dazu, dass beim achswärtigen Einbiegen des Ringkragens zur Bildung des Formkragens eine Materialauffaltung nach innen vorgegeben wird. Zum anderen lässt sich diese Art eines versetzten Flächenverlaufs besonders leicht zur Verfügung stellen, insbesondere mit einem weiter unten erläuterten Werkzeug, das zum achswärtigen Einbiegen des Ringkragens ringkragenseitig wenigstens eine dem versetzten Flächenverlauf entsprechende Ausstülpung aufweist.

Um eine Materialauffaltung möglichst spannungsfrei zu gestalten, hat es sich als vorteilhaft erwiesen, dass der versetzte Flächenverlauf gewölbt ist, d. h. insbesondere stetig in die übrige Außenfläche und/oder Innenfläche übergeht.

Solche und andere versetzte, insbesondere gewölbte, Flächenverläufe lassen sich besonders vorteilhaft von dem Werkzeug zum achswärtigen Einbiegen des Ringkragens beim Einbiegevorgang eindrücken. Das Werkzeug ist dazu vorteilhaft mit geeignet geformten Ausstülpungen an einer ringkragenseiten Aufsitzfläche versehen.

In besonders vorteilhafter Weise kann dabei die Wandstärke des Formkragens weitgehend gleich bleiben, d. h. weitgehend eine gleiche Wandstärke im versetzen Flächenverlauf als auch im Bereich der übrigen Außenfläche und/oder Innenfläche vorliegen.

Gemäß einer abgewandelten Weiterbildung des Konzepts kann es auch vorteilhaft sein, dass der Formkragen in wenigstens einem umfänglich verlaufenden Abschnitt eine Veränderung der Wandstärke, insbesondere eine Verjüngung der Wandstärke aufweist. Dies kann vorteilhaft dadurch erreicht werden, dass der Formkragen nur an seiner Außenfläche in dem wenigstens einen umfänglich verlaufenden Abschnitt einen zum Aufnahmeschlitz hin versetzen, insbesondere hin gewölbten, Flächenverlauf aufweist oder der Formkragen nur an seiner Innenfläche in wenigstens einem umfänglich verlaufenden Abschnitt vom Aufnahmeschlitz weg versetzten, insbesondere weg gewölbten, Flächenverlauf aufweist. Vorteilhaft kann auch eine Kombination der beiden vorgenannten Weiterbildungen im Rahmen einer Abwandlung vorteilhaft genutzt werden, indem der Formkragen an seiner Außenfläche in wenigstens einem umfänglich verlaufenden Abschnitt einen zum Aufnahmeschlitz hin versetzen Flächenverlauf aufweist und der Formkragen an seiner Innenfläche in wenigstens einem umfänglich verlaufenden Abschnitt einen vom Aufnahmeschlitz weg versetzten Flächenverlauf aufweist. Vorteilhaft sind die versetzten Flächenverläufe der Außenfläche und der Innenfläche an einem umfänglich gleich angeordneten Abschnitt platziert.

Solche und andere Weiterbildungen betreffen die Ausgestaltung und Anordnung von einem oder mehreren versetzten oder gewölbten Flächenverläufen im Bereich der Oberfläche, insbesondere Außen- und/oder Innenfläche, des Formkragens und können je nach Zweckmäßigkeit vorgesehen werden, um in vorteilhafter Weise eine Materialeinfaltung beim axialen Einbiegen des Ringkragens aufzufangen und kontrolliert zu gestalten.

Bevorzugt soll der zwei parallele Randkanten anbietende Aufnahmeschlitz querschnittlich in einem Winkel zu diesen Randkanten geneigt sein; jedoch liegt es auch im Rahmen der Erfindung, den Aufnahmeschlitz in einer Diametralebene der Schraubmutter verlaufen zu lassen.

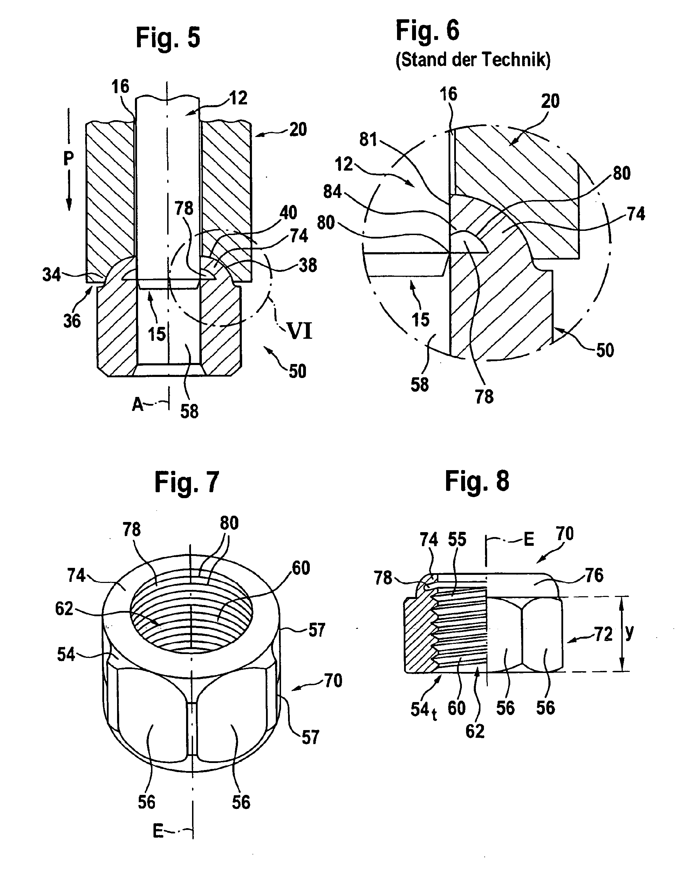

In einer bevorzugten ersten Variante der Erfindung, die insbesondere in Bezug auf die Fig. 7 bis Fig. 10 detailliert im Rahmen einer ersten bevorzugten Ausführungsform der Erfindung erläutert ist, ist der Ringkragen querschnittlich derart achswärts gebogen, dass der Aufnahmeschlitz zur Gewindebohrung hin offen ist. Das heißt, die Randkanten des Aufnahmeschlitzes sind zur Gewindebohrung hin beabstandet.

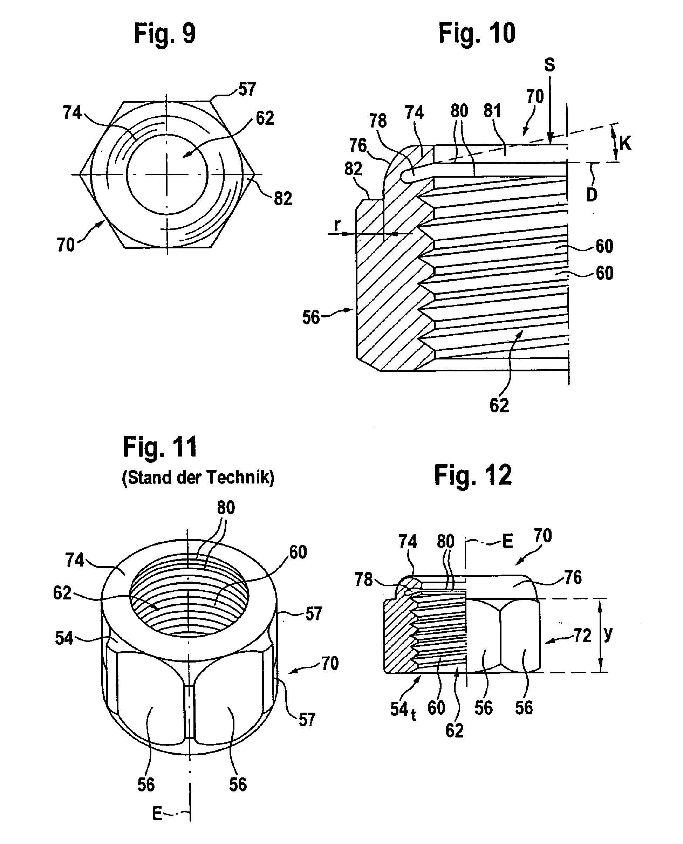

In einer zweiten Variante, die insbesondere in Bezug auf Fig. 11 bis Fig. 14 im Rahmen einer weiteren besonders bevorzugten Ausführungsform der Erfindung im Detail erläutert ist, ist der Ringkragen querschnittlich derart achswärts gebogen, dass der Aufnahmeschlitz zur Gewindebohrung hin geschlossen ist. Das heißt, die Randkanten des Aufnahmeschlitzes liegen zur Gewindebohrung hin praktisch aneinander.

In beiden Varianten ist ein im Stirnbereich des gebogenen Formkragens eingeformtes Gewinde zum übrigen Gewinde der Schraubmutter versetzt, so dass die erfindungsgemäße Wirkung einer Sicherung beim Aufschrauben auf einen Bolzen oder eine Schraube durch eine federnde gegen die Gewindeflanken des Bolzens oder der Schraube wirkende Kraft erzeugt wird. Der Versatz des im Stirnbereich gebogenen Formkragens angebrachten Gewindes relativ zum übrigen Gewinde der Schraubmutter ist vergleichsweise gering und beträgt gegebenenfalls lediglich einige wenige Zehntel Millimeter, beispielsweise 1 oder 2 Zehntel Millimeter, was zur Erzeugung der erfindungsgemäßen Wirkung ausreicht. Im übrigen ist ein derartiger Versatz, wie von der Erfindung erkannt, praktisch nur durch den erfindungsgemäßen achswärts gebogenen Ringkragen erreichbar.

Um eine Federwirkung des Formkragens zu variieren, insbesondere flexibler zu gestalten, kann es von Vorteil sein, dass der Ringkragen - und entsprechend der Formkragen - entlang des Umfangs der Schraubmutter abschnittsweise verläuft. Dazu ist es von Vorteil, dass benachbarte Abschnitte des Ringkragens/Formkragens durch eine Unterbrechung, z.B. eine Einschneidung oder sonstigen Spalt, vollständig oder teilweise voneinander getrennt sind. Ein einzelner Abschnitt hat gegebenenfalls eine auf eine bestimmte Verwendung abzielende vorteilhaftere Federwirkung im Vergleich zu einem entlang eines vollen Umfangs der Schraubmutter verlaufenden Formkragens.

Von besonderer Bedeutung ist das Merkmal, dass in dem Aufnahmeschlitz ein dessen Randkanten achswärts überragendes Halte- und/oder Dichtorgan festgelegt ist, das beispielsweise innenseitig einem Schraubstift anliegt, der im Gewinde der Schraubmutter festliegt.

In Weiterbildung der Erfindung ist mit Vorteil vorgesehen, dass der zwei parallelen Randkanten anbietende Aufnahmeschlitz querschnittlich in einem Winkel zu den Randkanten geneigt ist (Fig. 10).

In Weiterbildung der Erfindung ist mit Vorteil vorgesehen, dass der dem Aufnahmeschlitz benachbarte Stirnbereich des Formkragens einen Stauchwulst aufweist, der querschnittlich breiter als der anschließende Querschnitt (Fig. 6) des Formkragens ist.

In Weiterbildung der Erfindung ist mit Vorteil vorgesehen, dass der Ringkragen querschnittlich so achswärts gebogen ist, dass der Aufnahmeschlitz zur Gewindebohrung hin offen ist und die Randkanten des Aufnahmeschlitzes zur Gewindebohrung hin beabstandet sind.

In Weiterbildung der Erfindung ist mit Vorteil vorgesehen, dass der Ringkragen querschnittlich so achswärts gebogen ist, dass der Aufnahmeschlitz zur Gewindebohrung hin geschlossen ist und die Randkanten des Aufnahmeschlitzes zur Gewindebohrung aneinander liegen.

In Weiterbildung der Erfindung ist mit Vorteil vorgesehen, dass der Ringkragen an einer äußeren Wandung der Stirnfläche verläuft.

In Weiterbildung der Erfindung ist mit Vorteil vorgesehen, dass der Ringkragen entlang eines vollen Umfangs der Schraubmutter verläuft.

In Weiterbildung der Erfindung ist mit Vorteil vorgesehen, dass der Ringkragen entlang des Umfangs der Schraubmutter abschnittsweise verläuft, insbesondere benachbarte Abschnitte des Ringkragens durch eine Unterbrechung voneinander getrennt sind.

In Weiterbildung der Erfindung ist mit Vorteil vorgesehen, dass in dem Aufnahmeschlitz (78) ein dessen Randkanten (80) achswärts überragendes Halte- und/oder Dichtorgan festgelegt ist.

In Weiterbildung der Erfindung umfasst die Schraubmutter mit Vorteil ein ringförmiges Halte- und/oder Dichtorgan.

In Weiterbildung der Erfindung ist mit Vorteil vorgesehen, dass der Formkragen an seiner Außenfläche und Innenfläche an einem umfänglich gleich angeordneten Abschnitt den zum Aufnahmeschlitz hin versetzten, insbesondere hin gewölbten, Flächenverlauf aufweist, vorzugsweise bei gleichbleibender Wandstärke des Formkragens.

In Weiterbildung der Erfindung ist mit Vorteil vorgesehen, dass der zum Aufnahmeschlitz hin versetzte, insbesondere hin gewölbte, Flächenverlauf eingedrückt ist, insbesondere von dem Werkzeug zum achswärtigen Einbiegen des Ringkragens.

In Weiterbildung der Erfindung ist mit Vorteil vorgesehen, dass der Formkragen in dem Flächenverlauf des wenigstens einen umfänglich verlaufenden Abschnitts eine Veränderung, insbesondere Verjüngung, der Wandstärke aufweist.

In Weiterbildung der Erfindung ist mit Vorteil vorgesehen, dass der Formkragen nur an seiner Außenfläche in dem wenigstens einen umfänglich verlaufenden Abschnitt den zum Aufnahmeschlitz hin versetzten, insbesondere hin gewölbten, Flächenverlauf aufweist.

In Weiterbildung der Erfindung ist mit Vorteil vorgesehen, dass der Formkragen nur an seiner Innenfläche in dem wenigstens einen umfänglich verlaufenden Abschnitt den zum Aufnahmeschlitz hin oder weg versetzten, insbesondere hin oder weg gewölbten, Flächenverlauf aufweist.

In Weiterbildung der Erfindung ist mit Vorteil vorgesehen, dass der Formkragen an seiner Außenfläche in dem wenigstens einen umfänglich verlaufenden Abschnitt den zum Aufnahmeschlitz hin versetzten, insbesondere hin gewölbten, Flächenverlauf aufweist und der Formkragen an seiner Innenfläche in dem wenigstens einen umfänglich verlaufenden Abschnitt den vom Aufnahmeschlitz weg versetzten, insbesondere weg gewölbten, Flächenverlauf aufweist, insbesondere an einem umgänglich gleich angeordneten Abschnitt.

Das erfindungsgemäße Verfahren zum Herstellen einer Schraubmutter gibt vor, dass an einer Stirnfläche einer dem Grundriss der Schraubmutter entsprechenden Rohlingsmutter ein Ringkragen mit kreisförmiger freier Oberkante angeformt und durch ein axial an letztere herangeführtes Druckwerkzeug zur Längsachse der Rohlingsmutter hin querschnittlich gekrümmt wird. Zudem soll die freie Oberkante des Ringkragens umlaufend parallel an die benachbarte Stirnfläche der Rohlingsmutter herangeführt und in Abstand zu dieser angeordnet werden.

In einer ersten Variante wird zudem der Ringkragen in einem Stirnbereich an seiner Oberkante beim Verformen aufgestaucht, so dass jener Stirnbereich einen größeren Querschnitt hat als der anschließende Bereich des Formkragens. In einer zweiten Variante ist der Stirnbereich bereits am Rohling gegenüber dem anschließenden Querschnitt des Ringkragens verbreitert und kann zusätzlich, muss aber nicht, aufgestaucht werden.

Nach einem weiteren Merkmal des erfindungsgemäßen Verfahrens wird in einen axialen Lochkanal der Rohlingsmutter ein Innengewinde eingeschnitten oder auf andere Weise eingeformt, insbesondere auch in den Stirnbereich des gebogenen Formkragens. Um die Schraubmutter zu komplettieren, soll letzterer im Übrigen nach Einformung des Innengewindes zu diesem hin versetzt werden. Dies kann derart erfolgen, dass die Randkanten des Aufnahmeschlitzes zur Gewindebohrung hin beabstandet sind oder aufeinanderliegen. Der Versatz bewirkt eine federnd klemmende Kraft auf die Gewindeflanken eines Bolzens oder Schraube beim Verschrauben mit der Schraubmutter.

In einer besonders bevorzugten ersten Alternative des erfindungsgemäßen Verfahrens ist erfindungsgemäß vorgesehen, dass beim achswärtigen Einbiegen des Ringkragens an der Außenfläche und der Innenfläche des Ringkragens ein Flächenverlauf an einem umfänglich gleich angeordneten Abschnitt eingedrückt wird. Diese Alternative im erfindungsgemäßen Verfahren führt dazu, dass der Formkragen an seiner Außen-und Innenfläche an einem umfänglich gleich angeordneten Abschnitt einen zum Aufnahmeschlitz hin versetzten, insbesondere hin gewölbten, Flächenverlauf aufweist. Vorteilhaft bleibt dabei die Wandstärke des Formkragens gleich. Diese Alternative des erfindungsgemäßen Verfahrens hat den wesentlichen Vorteil, dass kein gesonderter Arbeitsschritt erforderlich ist und darüber hinaus beim achswärtigen Einbiegen des Ringkragens zur Bildung des Formkragens praktisch in einem Arbeitsschritt die versetzten Flächenverläufe der Innen- und Außenfläche gebildet werden unter Aufnahme des im enger werdenden Raum nicht mehr unterzubringenden Materials des Ringkragens.

In einer zweiten Alternative des erfindungsgemäßen Verfahrens ist ein versetzter Flächenverlauf bereits vor dem achswärtigen Einbiegen des Ringkragens am Ringkragen vorhanden. Dies setzt eine modifizierte Herstellung des Ringkragens voraus. Ein solcher Ringkragen lässt sich mit einem besonders einfach gestalteten Werkzeug achswärts leicht einbiegen. Während das Werkzeug zur Realisierung der ersten Alternative des erfindungsgemäßen Verfahrens ringkragenseitig wenigstens eine Ausstülpung aufweist, kann das Werkzeug zur Realisierung der zweiten Alternative des erfindungsgemäßen Verfahrens vorteilhaft ringkragenseitig ausstülpungsfrei sein.

Ein für die Durchführung des Verfahrens geeignetes Werkzeug enthält in einem Gehäuse einen Führungskanal für einen Druckstempel, der an einem von einem Ringrand einer Werkzeugstirnfläche gebildeten Aufnahmebereich für ein Werkstück endet; der Druckstempel lagert im Führungskanal axial verschiebbar. Zudem soll jener Ringrand eine querschnittlich zur Stirnfläche hin einwärts gekrümmte Innenfläche aufweisen, welche das Krümmen des Ringkragens während des Pressvorganges beeinflusst.

Als günstig hat es sich erwiesen, eine freie Druckstirn des Druckstempels auf das Werkstück innerhalb von dessen Ringkragen aufzusetzen, wobei an ihm das Gehäuse dem Ringkragen des Werkstückes zuführbar angeordnet ist.

Nach einem weiteren Merkmal der Erfindung ist das der freien Druckstirn ferne Ende des Druckstempels mit wenigstens einem radial abkragenden Anschlagorgan versehen; in dessen Bewegungsbahn ist eine Innenstufe des Gehäuses als Gegenanschlag angeordnet.

In Weiterbildung der Erfindung ist mit Vorteil vorgesehen, dass zwischen dem Innenbereich der Stirnfläche und der Innenfläche des Ringkragens eine umlaufende Innennut hergestellt wird.

In Weiterbildung der Erfindung ist mit Vorteil vorgesehen, dass ein Innengewinde eingeschnitten wird.

In Weiterbildung der Erfindung ist mit Vorteil vorgesehen, dass der Formkragen an einer Oberfläche in wenigstens einem umfänglich verlaufenden Abschnitt eines relativ zur übrigen Oberfläche versetzten, insbesondere gewölbten, Flächenverlauf aufweist.

In Weiterbildung der Erfindung ist mit Vorteil vorgesehen, dass der Formkragen an seiner Außenfläche und Innenfläche an einem umfänglich gleich angeordneten Abschnitt einen zum Aufnahmeschlitz hin versetzten Flächenverlauf aufweist, insbesondere bei gleichbleibender Wandstärke des Formkragens, und der zum Aufnahmeschlitz hin versetzte Flächenverlauf beim achswärtigen Einbiegen des Ringkragens eingedrückt wird, insbesondere von dem Werkzeug zum achswärtigen Einbiegen des Ringkragens.

In Weiterbildung der Erfindung ist mit Vorteil vorgesehen, dass der Formkragen an seiner Außenfläche und/oder Innenfläche in wenigstens einem umfänglich verlaufenden Abschnitt einen zum Aufnahmeschlitz versetzten Flächenverlauf aufweist, der vor dem achswärtigen Einbiegen des Ringkragens am Ringkragen vorhanden war, insbesondere das Werkzeug zum achswärigen Einbiegen des Ringkragens ringkragenseitig keine Ausstülpung aufweist.

Ein Werkzeug zur Realisierung der ersten Alternative des oben erläuterten erfindungsgemäßen Verfahrens weist erfindungsgemäß ringkragenseitig wenigstens eine Ausstülpung auf. Ein Werkzeug zur Realisierung einer zweiten Alternative des oben erläuterten erfindungsgemäßen Verfahrens weist ringkragenseitig vorzugsweise keine Ausstülpung auf.

In Weiterbildung der Erfindung ist mit Vorteil vorgesehen, dass der Ringrand eine querschnittlich zu einer Stirnfläche des Gehäuses hin einwärts gekrümmte Innenfläche zur Anlage eines Ringkragens des Werkstückes aufweist.

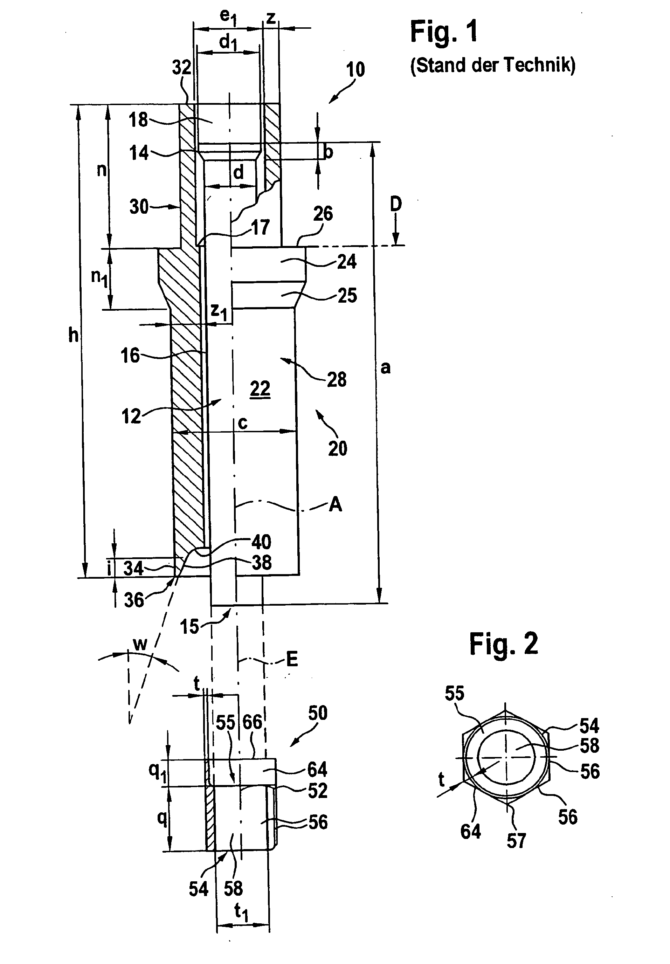

In Weiterbildung der Erfindung ist mit Vorteil vorgesehen, dass das der freien Druckstirn ferne Ende des Druckstempels mit wenigstens einem radial abkragenden Anschlagorgan versehen und in dessen Bewegungsbahn eine Innenstufe des Gehäuses als Anschlagpartner für das Anschlagorgan des Druckstempels angeordnet ist (Fig. 1).

In Weiterbildung der Erfindung ist mit Vorteil vorgesehen, dass die Werkzeugstirnfläche des Gehäuses auf den Formkragen des Werkstückes aufsetzbar gestaltet ist.

In Weiterbildung der Erfindung ist mit Vorteil vorgesehen, dass ringkragenseitig wenigstens eine Ausstülpung auf einer Aufsetzfläche vorhanden ist.

In Weiterbildung der Erfindung ist mit Vorteil vorgesehen, dass ringkragenseitig eine Aufsetzfläche weitgehend glatt ist, insbesondere frei von einer Ausstülpung ist.

Insgesamt ergibt sich eine bestechende Lösung für die vom Erfinder gesehene Aufgabe.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine Seitenansicht eines teilweise geschnittenen Druck erzeugenden Werkzeuges mit ihm in seiner Längsachse -- in Abstand -- zugeordnetem und ebenfalls teilweise geschnittenem Werkstück gemäß dem Stand der Technik;
- Fig. 2:: die Draufsicht auf das Werkstück der Fig. 1 gemäß dem Stand der Technik;
- Fig. 3:: eine Schrägsicht auf das gegenüber Fig. 1, Fig. 2 vergrößert wiedergegebene Werkstück gemäß dem Stand der Technik;
- Fig. 4:: die teilweise geschnittene Seitenansicht des Werkzeuges mit teilweise aufgenommenem Werkstück gemäß dem Stand der Technik;
- Fig. 5:: einen vergrößerten Ausschnitt des längsgeschnittenen Werkzeuges mit verformtem Werkstück gemäß dem Stand der Technik;
- Fig. 6:: einen vergrößerten Ausschnitt aus Fig. 5 nach deren Pfeil VI gemäß dem Stand der Technik;
- Fig. 7:: eine der Fig. 3 entsprechende Darstellung des verformten Werkstückes der Schraubmutter gemäß dem Stand der Technik;
- Fig. 8:: das Werkstück nach seiner Bearbeitung, die Schraubmutter in teilweise geschnittener Darstellung gemäß dem Stand der Technik;
- Fig. 9:: die Draufsicht auf das bearbeitete Werkstück, die Schraubmutter, der Fig. 8 gemäß dem Stand der Technik;
- Fig. 10:: eine gegenüber Fig. 8 vergrößerte Teilwiedergabe des bearbeiteten Werkstückes, der Schraubmutter gemäß dem Stand der Technik;
- Fig. 11:: eine der Fig. 3 entsprechende Darstellung des verformten Werkstücks der Schraubmutter gemäß einer abgewandelten Ausführungsform gemäß dem Stand der Technik;
- Fig. 12:: das Werkstück nach seiner Bearbeitung, die Schraubmutter, gemäß der abgewandelten Ausführungsform nach Fig. 11 in teilweise geschnittener Darstellung gemäß dem Stand der Technik;
- Fig. 13:: die Draufsicht auf das bearbeitete Werkstück, die Schraubmutter, gemäß der abgewandelten Ausführungsform nach Fig. 11 gemäß dem Stand der Technik;
- Fig. 14:: eine gegenüber Fig. 12 vergrößerte Teilwiedergabe des Werkstücks, der Schraubmutter, gemäß der abgewandelten Ausführungsform nach Fig. 11 gemäß dem Stand der Technik;
- Fig. 15:: eine Schrägsicht auf eine gegenüber Fig. 1, Fig. 2 vergrößert wiedergegebene, abgewandelte Ausführungsform eines Werkstücks gemäß dem Stand der Technik;
- Fig. 16A, Fig. 16B:: eine Schnittansicht eines Werkstücks ähnlich der Fig. 3, wobei ein Stirnbereich des Ringkragens am Werkstück nicht verbreitert gegenüber dem anschließenden Querschnitt des Ringkragens ist (Fig. 16A) bzw. ein Stirnbereich des Ringkragens bereits am Werkstück breiter als der anschließende Querschnitt des Ringkragens ist (Fig. 16B);
- Fig. 17A, Fig. 17B, Fig. 17C:: eine besonders bevorzugte Ausführungsform einer Schraubmutter gemäß der Erfindung in perspektivischer Ansicht (A), einer Seitenschnittansicht (B) und einer Draufsicht (C);
- Fig. 18A, Fig. 18B, Fig. 18C:: das Werkzeug der Ansicht (A) in einer seitlichen Querschnittsansicht (A) in druckerzeugender Anwendung auf ein Werkstück, beispielsweise gemäß einer Ausführungsform der Fig. 16A, Fig. 16B zur Erzeugung einer Schraubmutter, beispielsweise der Ausführungsform der Fig. 17 und das Werkzeug der Ansicht (A) in einer perspektivischen Ansicht (B) und Schnittansicht (C) beabstandet zur fertigen Schraubmutter;
- Fig. 19A, Fig. 19B, Fig. 19C:: eine besonders bevorzugte Ausführungsform eines Werkzeugs gemäß der Erfindung in einer Seitenschnittansicht (A), einer perspektivischen Darstellung von unten mit Blick auf die ringkragenseitige Aufsetzflä- che des Werkzeugs (B) und mit einer Teilansicht des Details B einer Ausstülpung auf der ringkragenseitigen Aufsetzfläche des Werkzeugs (C);
- Fig. 20: eine fünfte Ausführungsform einer Schraubmutter gemäß dem Konzept der Erfindung in einer perspektivischen Ansicht;
- Fig. 21:: eine abgewandelte Ausführungsform eines Werkstücks zur Erzeugung einer zweiten Ausführungsform einer Schraubmutter gemäß dem Konzept der Erfindung;
- Fig. 22:: eine abgewandelte Ausführungsform eines Werkstücks zur Erzeugung einer dritten Ausführungsform einer Schraubmutter gemäß dem Konzept der Erfindung;
- Fig. 23:: eine abgewandelte Ausführungsform eines Werkstücks zur Erzeugung einer vierten Ausführungsform einer Schraubmutter gemäß dem Konzept der Erfindung;
- Fig. 24A, Fig. 24B:: eine Ausführungsform der Fig. 20 bis Fig. 23 in einer seitlichen Darstellung mit einem entsprechenden Werkzeug gemäß einer abgewandelten Ausführungsform der Erfindung, wobei das Werkzeug eine praktisch glatte Aufsetzfläche hat, insbesondere eine Aufsetzfläche ohne Ausstülpungen an der Ringkragenseite (A) sowie das Werkzeug in perspektivischer Ansicht auf die ringkragenseitige Aufsetzfläche (B).

Ein metallisches Werkzeug 10 zum Bearbeiten eines ringartigen Werkstückes 50 weist einen Druckstempel 12 der Länge a von hier 76 mm sowie des Durchmessers d von etwa 10 mm auf, aus dessen in Fig. 1 oberem Ende ein zentrischer Anschlagteller 14 des Durchmessers d₁ von hier 12 mm und axialer Dicke b von 3 mm herausgeformt ist. Die Länge jenes Durchmessers d des Druckstempels 12 -- und damit von dessen Druckstirn 15 -- ist vom Durchmesser eines weiter unten beschriebenen Lochkanals einer Rohlingsmutter 52 abhängig. Der Druckstempel 12 lagert verschieblich in einem Führungskanal 16 eines hülsenartigen Gehäuses 20, dessen axiale Länge h hier mit 78 mm angegeben wird bei einem Außendurchmesser c von etwa 22 mm. Der Durchmesser e des in der Gehäuselängsachse A verlaufenden Führungskanals 16 ist geringfügig größer als der Durchmesser d jenes Druckstempels 12.

Im axialen Abstand n von 23 mm zum oberen Mündungsrand 32 des zylindrischen Gehäuses 20 ist an dessen Außenfläche 22 ein Ringkragen 24 angeformt. An einer von dessen in Fig. 1 oberen Ringkante 26 bestimmten Diametralebene D endet zum einen ein den Führungskanal 16 enthaltender Sockelabschnitt 28 des Gehäuses 20, der an jener Ebene D in einen -- den erwähnten Mündungsrand 32 anbietenden -- Kopfabschnitt 30 des Gehäuses 20 übergeht. Zum anderen mündet der Führungskanal 16 -- unter Bildung einer ringförmigen Innenstufe 17 als Anschlaggegenorgan für Anschlagteller 14 -- in einen ihn fortsetzenden Axialkanal 18, dessen Länge von jenem axialen Abstand n des Ringkragens 24 vom Mündungsrand 32 bestimmt ist und der im Kopfabschnitt 30 des Gehäuses 20 verläuft. Die Wanddicke z von 3 mm des Kopfabschnitts 30 ist geringer als die Wanddicke z₁ von etwa 5 mm des Sockelabschnitts 28. Im Übrigen weist der Ringkragen 24 in seinem dem Sockelabschnitt 28 nahen Bereich eine zu letzterem geneigte Ringfläche 25 auf.

Das freie Ende des Sockelabschnittes 28 des Gehäuses 20 wird von einem Ringrand 34 der Höhe i von etwa 4 mm bestimmt, von dessen Ringkante 36 eine zur Längsachse A hin in einem Winkel w von etwa 25° geneigte Innenfläche 38 ausgeht. Diese Innenfläche 38 endet an einer querschnittlich zur Längsachse A geneigten Stirnfläche 40 des Gehäusesockelabschnitts 28.

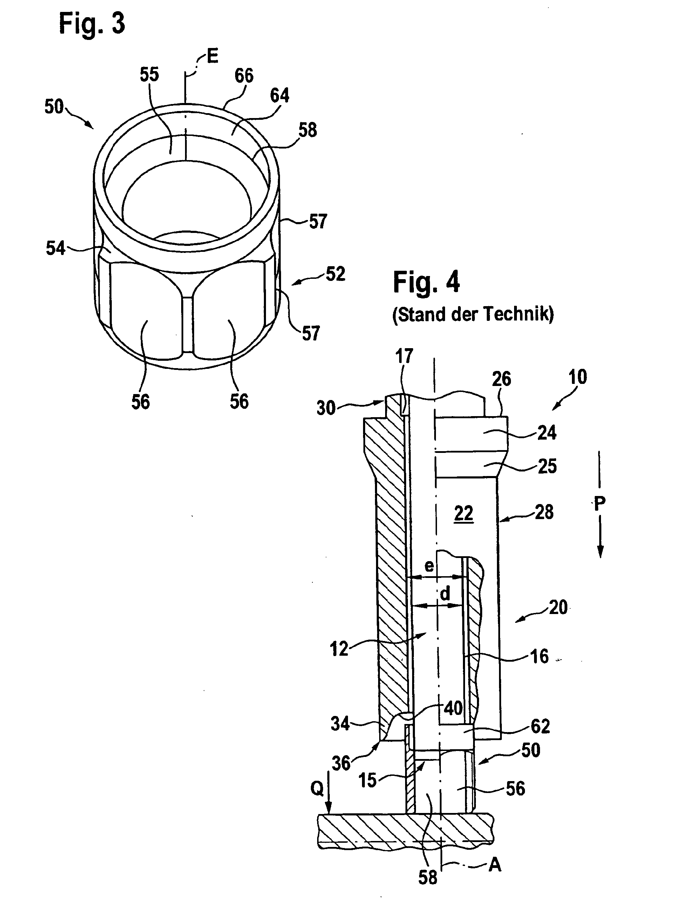

Dem Gehäuse 20 bzw. dessen Ringrand 34 ist in Fig. 1 axial ein Werkstück 50 aus einem Metallwerkstoff zugeordnet. Es handelt sich dabei um den Rohling einer Rohlingsmutter 52 sechseckigen Grundrisses der -- von zwei Stirnflächen 54, 54ₜ der Rohlingsmutter 52 bestimmten -- axialen Höhe q von etwa 10 mm. Zwischen sechs -- in sich geradflächigenWandflächenabschnitten 56 der Rohlingsmutter 52 erstreckt sich in Werkstücklängsachse E ein Lochkanal 58. An die in Fig. 3 erkennbare obere Stirnfläche 54 ist -- unter Begrenzung einer innenliegenden ringartigen Auflagefläche 55achsparallel ein Ringkragen 64 der Höhe q₁ von beispielsweise 5 mm sowie geringer Wanddicke t angeformt, dessen freie Oberkante 66 ist von kreisförmigem Grundriss.

Dem einer bei Q skizzierten Grundfläche aufliegenden Werkstück 50 wird koaxial der Druckstempel 12 des Werkzeuges 10 so zugeführt, dass dessen Druckstirn 15 jene Auflagefläche 55 passiert, d.h. deren Innendurchmesser t₁ ist geringfügig länger als der Durchmesser d der Druckstirn 15. Beim Absenken des Gehäuses 20 in Druckrichtung P verformen die geneigten Innenflächen 38 von dessen Ringkante 36 sowie die anschließende Stirnfläche 40 den Ringkragen 64 des Werkstückes 50 gemäß Fig. 5, 6 auf dem Wege des Kaltfließpressens in einen querschnittlich achswärts gekrümmten Formkragen 74, nach dessen Entstehen im Lochkanal 58 ein Innengewinde 60 geformt -- beispielsweise geschnitten -- wird; so entsteht eine in Fig. 7 bis 10 skizzierte Befestigungsschraubmutter 70 mit -- jene achsparallelen Wandflächenabschnitte 56 anbietendem -- Schraubsockel 72 der Höhe y; jener Lochkanal 58 wird durch das Einformen des Innengewindes 60 zu einem Schraubloch bzw. einer Gewindebohrung 62. Dieser steht axial der Formkragen 74 mit querschnittlich achswärts gekrümmter Ober- oder Außenfläche 76 gegenüber. Dieser ist beim Pressen jenes Ringkragens 64 durch dessen querschnittliches Verformen entstanden und enthält eine umlaufende Innennut als Aufnahmeschlitz 78 für einen nicht gezeigten Einsatzring. Nach dem Einformen des Innengewindes 60 wird das Gehäuse 20 oder ein entsprechendes Werkzeug auf den Ringkragen 64 gedrückt und dieser noch etwas zum Innengewinde 60 hin verformt.

Der Querschnitt des nahe der Außenfläche 76 des Formkragens 74 verlaufenden Aufnahmeschlitzes 78 ist gemäß Fig. 10 zu seinen Randkanten 80 in einem flachen Winkel k geneigt, kann aber in anderer Ausgestaltung auch in einer Diametralebene des Formkragens 74 verlaufen, also ohne Querschnittsneigung. In Fig. 6 ist der Stirnbereich 81 des geneigten Formkragens 74 verdeutlicht, der beim Ausformen einer Aufstauchung ausgesetzt ist, wodurch sich am freien Ende ein Stauchwulst 84 bildet, der querschnittlich breiter ist als der Formkragen 74 an sich; diese Querschnittsunterschiede sind in Fig. 10 aus Gründen der Übersichtlichkeit nicht wiedergegeben.

In Fig. 10 ist ein Außenabsatz 82 der radialen Breite r zwischen dem achsparallelen Wandflächenabschnitt 56 und der Außenfläche 76 des Formkragens 74 zu erkennen, der Abschnitt der erwähnten oberen Stirnfläche 54 ist; die gezeigte radiale Breite r des Aüßenabsatzes 82 besteht nur an den achsparallelen Kanten 57 der Wandflächenabschnitte 56.

Nicht dargestellt ist der oben erwähnte Einsatzring, der als Ringelement im Aufnahmeschlitz 78 klemmend gehalten wird sowie achswärts die Randkanten 80 überragt und einem im Schraubloch 62 angeordneten Schraubstift od.dgl. anliegt als Halte- und/oder Dichtorgan. Je nach Funktion ist letzteres aus starrem oder aus begrenzt flexiblem Werkstoff hergestellt.

Bei der in Fig. 3 gezeigten Ausführungsform einer Rohlingsmutter 52 ist der Ringkragen 64 auf seiner zum Lochkanal 58 hin gewandten Innenseite gewindefrei. In den davon abweichenden Ausführungsformen einer fertig bearbeiteten Schraubmutter der Fig. 7 bis Fig. 10 einerseits und Fig. 11 bis Fig. 14 andererseits, trägt der Ringkragen auf seiner zur Gewindebohrung 62 hin gewandten Innenseite, d.h. im Stirnbereich 81 ein Gewinde.

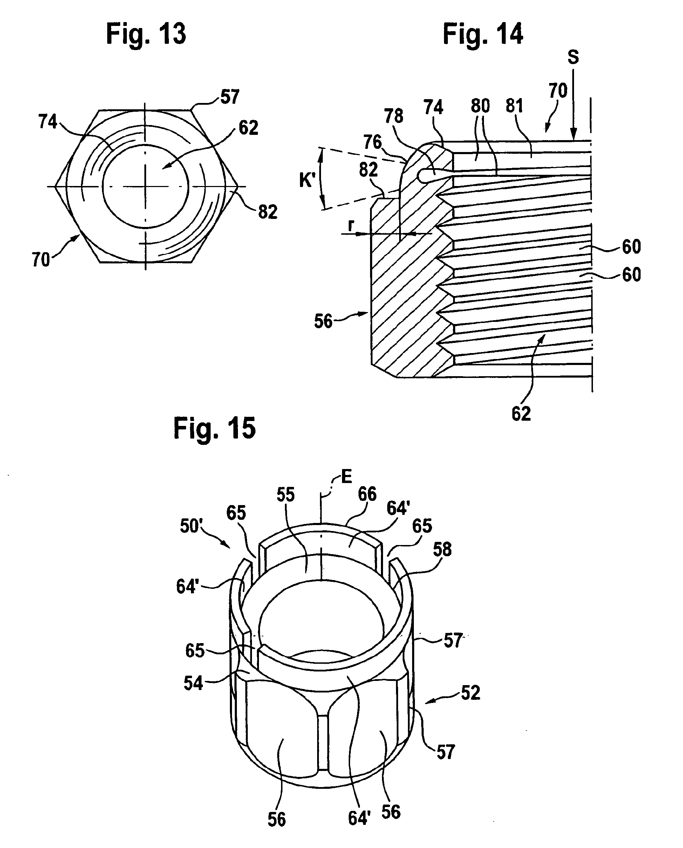

Das Gewinde im Stirnbereich 81 ist mit einem leichten Versatz, vorliegend 1 bis 2 Zehntel Millimeter, gegenüber dem übrigen Innengewinde 60 versetzt. Beim Aufschrauben der Schraubmutter, beispielsweise der von Fig. 10 oder der von Fig. 14, wird der Formkragen 74 also gegen die mit S bezeichnete Pfeilrichtung "aufgebogen" und schnappt nach Erreichen des richtigen Gewindegangmaßes in die Gewindeflanken eines Bolzen oder Schraubengewindes ein - dies allerdings unter Beibehaltung einer gewissen Spannung, die durch den Versatz des im Stirnbereich 81 des achswärts gebogenen Ringkragens 64 angebrachten Gewindes erreicht und welche eine entsprechende in die mit S bezeichnete Pfeilrichtung wirkende Federkraft bewirkt. Damit wird eine zwischen der Schraubmutter und einem Bolzen oder einer Schraube geschlossene Schraubverbindung gegen Öffnen gesichert.

In einer zu den Fig. 7 bis Fig. 10 abgewandelten Ausführungsform zeigt Fig. 11 bis Fig. 14 eine Schraubmutter, bei welcher - ansonsten wie in den vorhergehenden Fig. 1 bis Fig. 10 dargestellten Schraubmutter - in Abwandlung der Ringkragen 64 querschnittlich achswärts so gebogen ist, dass der Aufnahmeschlitz 78 zur Gewindebohrung 62 hin geschlossen ist. Vorliegend liegen dazu die Randkanten 80 des Aufnahmeschlitzes 78 zur Gewindebohrung 62 aneinander. Anders gesagt, der Aufnahmeschlitz 78 hat eine in Fig. 14 zu erkennende querschnittliche tropfenförmige Berandung, so dass nunmehr die am Aufnahmeschlitz 78 verlaufenden Randkanten 80 gemäß dem Winkel k' - in Abwandlung des Winkels k in Fig. 10 - zueinander geneigt sind. Ein vollständiges Aneinanderliegen der Randkanten 80 des Aufnahmeschlitzes 78 zur Gewindebohrung 62 hin kann durch das des Formkragens 74 zum Innengewinde 60 hin erreicht werden, nachdem, wie erläutert, das Innengewinde 60 sowohl im Stirnbereich 81 als auch bei der übrigen Schraubmutter eingeformt ist. Das abschließende Versetzen des Formkragens 74 wird vorliegend ein letztes, entsprechend dem Versatz geringfügiges Einbiegen oder Einstauchen des Formkragens 74 erreicht. Grundsätzlich kann bei der in Fig. 10 dargestellten Ausführungsform ein Versatz größer ausgestaltet werden, während bei der in Fig. 14 dargestellten Ausführungsform eine sichernde, federnde Kraft aufgrund der stärkeren Verbiegung des Formkragens 74 erreicht werden kann. Der Versatz kann im Bereich von 1 bis 2 Gewindegängen liegen. Im Beispiel der Fig. 10 liegt der Versatz bei 1,5 Gewindegängen. Im Beispiel der Fig. 14 bei 1 Gewindegang. Bei beiden Ausführungsformen hat es sich als besonders vorteilhaft erwiesen, dass der dem Aufnahmeschlitz benachbarte Stirnbereich 81 des Formkragens 74 dicker ist als dessen anschließender Querschnitt, welcher - wie in Fig. 6 gezeigt - vergleichsweise dünn ist und damit leicht umgebogen werden kann und durch die Verarbeitung und Herstellung der Schraube erleichtert.

Fig. 15 zeigt eine im Vergleich zu Fig. 3 abgewandelte Ausführungsform eines Werkstücks 50', das ebenso wie das in Fig. 3 gezeigte Werkstück 50 als Grundlage für eine Schraubmutter nach Fig. 5 bis Fig. 14 dienen kann. Bei dem Werkstück 50' verläuft der Ringkragen nur abschnittsweise entlang des Umfangs des Werkstücks 50'. Vorliegend sind drei Abschnitte 64' vorgesehen, die durch drei Unterbrechungen in Form von Spalte 65 vollständig voneinander getrennt, an der Stirnfläche 54 des Werkstücks 50' angeformt sind.

Die Abschnitte 64' lassen sich, wie oben beschrieben (Fig. 5, Fig. 6), achswärts biegen, um eine Schraubmutter gemäß dem Konzept der Erfindung zu erhalten.

Die Federwirkung eines aus den Abschnitten 64' gebildeten Formkragens ist vergleichsweise leichtgängiger und flexibler als die eine entlang des vollen Umfangs verlaufenden Formkragens gemäß Fig. 7 bis Fig. 14.

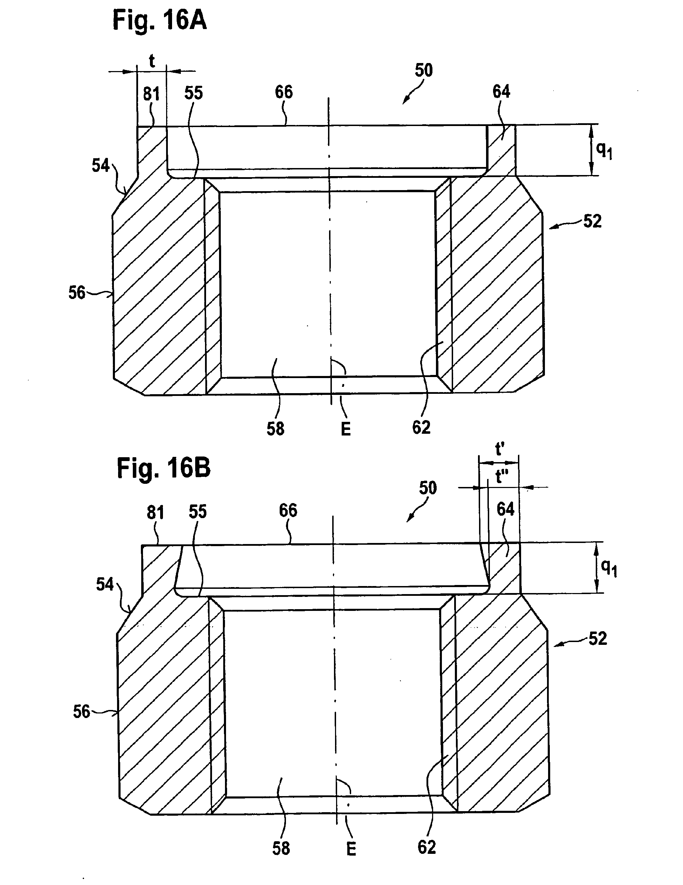

Fig. 16A zeigt eine Rohlingsmutter 52 ähnlich der in Fig. 3 in einer seitlichen Querschnittsansicht, wobei für identische Merkmale oder Merkmale mit identischer Wirkung gleiche Bezugszeichen verwendet sind. Betreffend die Fig. 16A wird demzufolge auf die Beschreibung, insbesondere der Fig. 1 bis Fig. 4, Bezug genommen.

Der an der Oberkante 66 des Ringkragens 64 gebildete Stirnbereich 81 weist vorliegend - ebenso wie der übrige sich anschließende Querschnitt des Ringkragens 64 - eine weitgehend gleichbleibende Wanddicke t auf. Im Unterschied dazu ist in Fig. 16B eine abgewandelte Ausführungsform eines Werkstücks 50 zur Bildung einer Rohlingsmutter 52 dargestellt, bei welcher der Einfachheit halber für identische oder ähnliche Merkmale oder Merkmale identischer oder ähnlicher Funktion gleiche Bezugszeichen verwendet sind. Im Unterschied zu der in Fig. 16A gezeigten Ausführungsform ist bei der in Fig. 16B gezeigten Ausführungsform einer Rohlingsmutter 52 der Stirnbereich 81 mit einem breiteren Querschnitt t' als der anschließende Querschnitt t" des Ringkragens 64 versehen. Während der Ringkragen 64 der in Fig. 16A dargestellten Ausführungsform einer Rohlingsmutter 52 zur Bildung eines besonders gut sichernden Gewindes am Stirnbereich 81 - wie in Fig. 7 dargestellt - beim achswärtigen Einbiegen des Ringkragens 64 vorteilhaft aufgestaucht wird, ist dies bei der in Fig. 16B dargestellten Ausführungsform einer Rohlingsmutter 52 zwar ebenfalls möglich, aber nicht unbedingt notwendig bzw. nur in geringerem Maße, da der Stirnbereich 81 bereits einen breiteren Querschnitt t' aufweist als der Querschnitt t" des anschließenden Ringkragens 64.

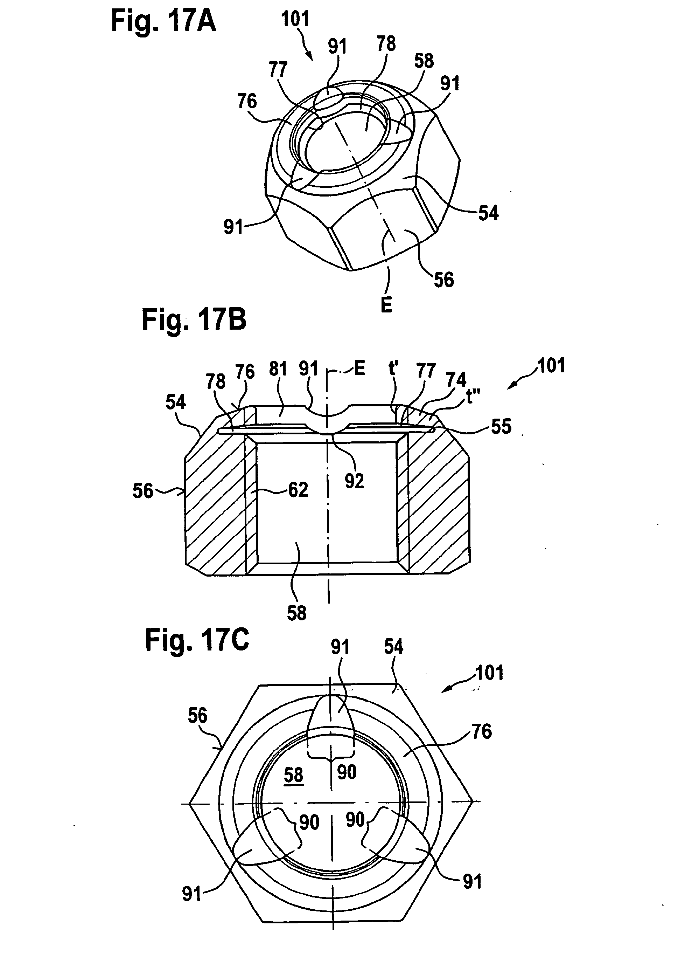

Fig. 17 zeigt eine erste Ausführungsform einer Schraubmutter 101 gemäß der Erfindung, welche im Unterschied zu den in Fig. 1 bis Fig. 15 gezeigten Schraubmuttern einen Formkragen 74 aufweist, der zum einen gemäß der Ausführungsform der Rohlingsmutter 52 der Fig. 16B an der Stirnfläche 81 bereits vor dem achswärtigen Einbiegen des Ringkragens 64 einen Querschnitt t' aufweist, welcher breiter ist als der sich anschließende Querschnitt t" des Formkragens 74. Zum anderen weist der Formkragen 74 sowohl an seiner Außenfläche 76 als auch an seiner Innenfläche 77 - vorliegend in drei umfänglich verlaufenden Abschnitten 90 - einen relativ zur übrigen Außenfläche 76 und Innenfläche 77 - vorliegend zum Aufnahmeschlitz 78 hin - gewölbten Flächenverlauf 91, 92 auf.

Zur Beschreibung dieser und der folgenden Ausführungsformen sind wiederum für identische oder ähnliche Merkmale oder Merkmale mit identischer oder ähnlicher Funktion gleiche Bezugszeichen verwendet.

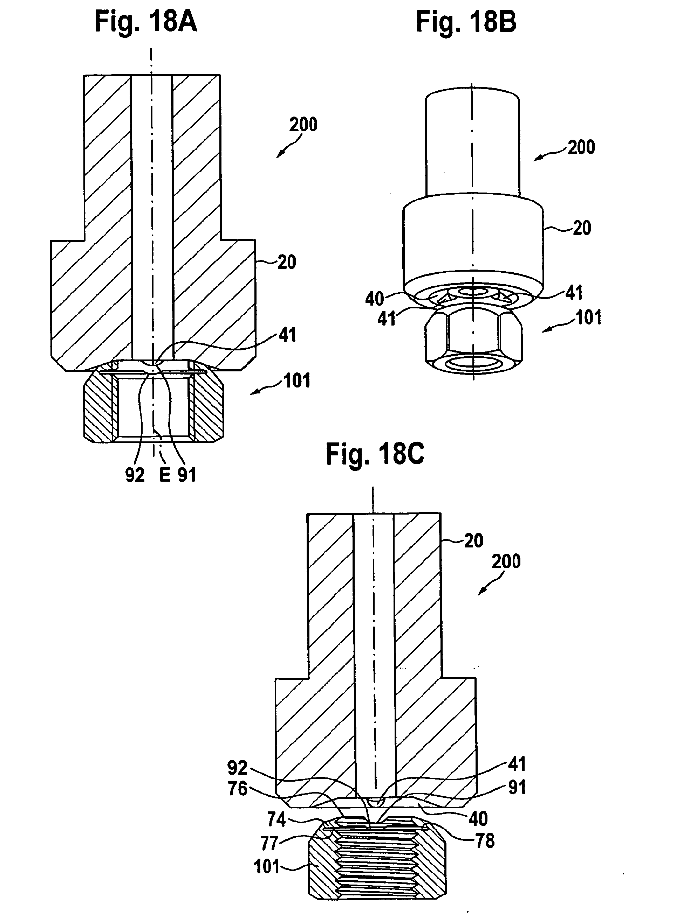

Fig. 18 zeigt, dass der vorliegend zum Aufnahmeschlitz 78 hin gewölbte Flächenverlauf der Außenfläche 76 und der Innenfläche 77 durch ein Werkzeug 200 erzeugt ist, von dem der Einfachheit halber in Fig. 18 nur das Gehäuse 20 mit seiner in Bezug auf die Fig. 1, Fig. 4, Fig. 5 und Fig. 6 abgewandelten Stirnfläche 40 mit der Funktion einer Aufsetzfläche gezeigt ist. In Ansichten (A) bis (C) der Fig. 18 ist das Werkzeug 200 zusammen mit der ersten Ausführungsform einer Schraubmutter 101 gezeigt. Das Werkzeug 200 kann allerdings auch zusammen mit anderen Ausführungsformen der Schraubmutter eingesetzt werden. Im Übrigen wird für gleiche oder ähnliche Teile oder Teile gleicher oder ähnlicher Funktion auf die Bezugszeichen der Fig. 1, Fig. 4 sowie Fig. 5 und Fig. 6 zurückgegriffen und - was die Funktion und Wirkung des Gehäuses 20 des Werkzeugs 200 anbetrifft - auf die vorgenannten Figuren und deren Beschreibung verwiesen.

Die Stirnfläche 40 des Werkzeugs 200 weist - im Unterschied zur Stirnfläche des in Fig. 1, Fig. 4, Fig. 5 und Fig. 6 gezeigten Werkzeugs - Ausstülpungen 41 auf, die zur Erzeugung des versetzten Flächenverlaufs 91, 92 an der Schraubmutter 101 dienen. Dazu wird der Flächenverlauf 91, 92 beim achswärtigen Einbiegen des Ringkragens 64 zur Bildung des Formkragens 74 in die übrige Außenfläche 76 eingedrückt und aus der übrigen Innenfläche 77 herausgedrückt. Als Vorlage dient in diesem Fall ein Werkstück 50 in Form der Rohlingsmutter 52 gemäß Fig. 16B. Es kann jedoch gleichermaßen - wie anhand von Fig. 6 erläutert - ein Werkstück 50 in Form einer Rohlingsmutter 52 gemäß der Ausführungsform in Fig. 16A verwendet werden, wobei im Stirnbereich 81 des Ringkragens 64 eine Aufstauchung stattfindet, um einen verbreiterten Querschnitt über die Wandstärke t des Ringkragens 64 hinaus zu erreichen.

Der besondere Vorteil der in Fig. 18 dargestellten Schraubmutter 101 liegt in der vergleichsweise einfachen Herstellungsart, da die Flächenverläufe 91, 92 nicht bereits am Ringkragen 64 vorgesehen sein müssen, sondern vielmehr durch das gemäß dem Konzept der Erfindung modifizierte Werkzeug 200 - dort nämlich durch die Ausstülpungen 41 an der Stirnfläche 40 - erzeugt werden.

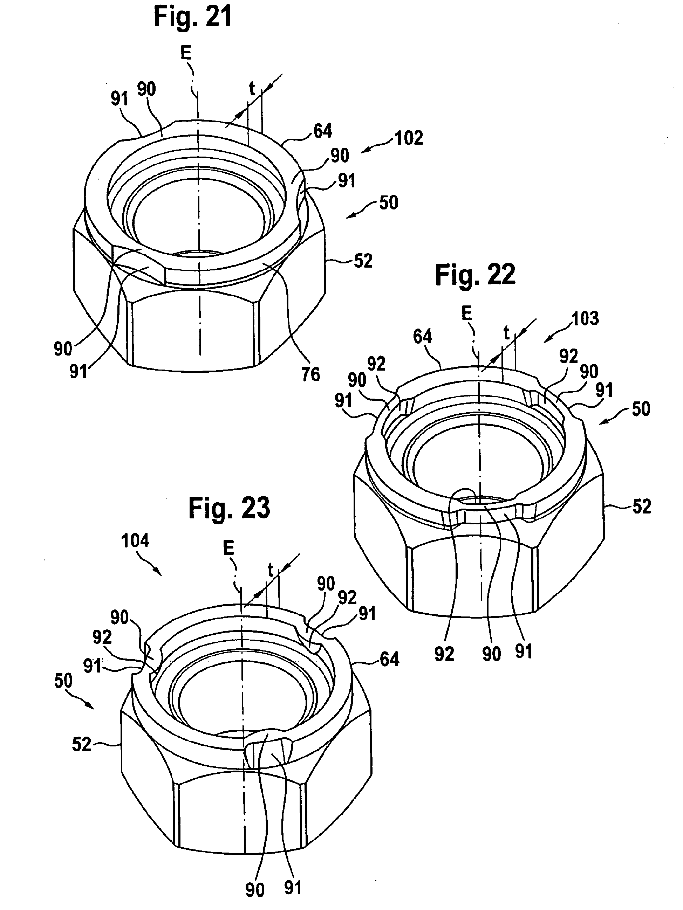

Fig. 21, Fig. 22 und Fig. 23 zeigen zweite, dritte und vierte Ausführungsformen von Werkstücken 50 in Form einer Rohlingsmutter 52, bei denen in Abwandlung zu der in Fig. 18 und Fig. 17 dargestellten ersten Ausführungsform einer Schraubmutter 101 zur Bildung einer nicht näher dargestellten zweiten, dritten und vierten Ausführungsform einer Schraubmutter 102, 103, 104 der Ringkragen 64 jeweils abgewandelt ausgeführt ist.

Alle Rohlingsmuttern 52 der zweiten, dritten und vierten Ausführungsform und damit allen Schraubmuttern 102, 103, 104 ist gemeinsam, dass der Ringkragen 64 und damit der Formkragen 74 der Schraubmutter 102, 103, 104 in wenigstens einem umfänglich verlaufenden Abschnitt 90 - vorliegend an drei Abschnitten 90 - mit einer Veränderung der Wandstärke t versehen ist. Bei den Ausführungsformen der Fig. 21 und Fig. 22 ist die Wandstärke im umfänglich verlaufenden Abschnitt 90 jeweils durchgängig verringert. Bei der Ausführungsform der Fig. 23 ist die Wandstärke im mittigen Bereich des umfänglich verlaufenden Abschnitts 90 verdickt und gegen den Rand des Abschnitts 90 hin jeweils verjüngt.

Im Einzelnen ist bei der Ausführungsform der Rohlingsmutter 42 der Fig. 21 zur Bildung der zweiten Ausführungsform einer Schraubmutter 102 der Ringkragen 64 - und damit der Formkragen 74 der Schraubmutter 102 - nur an seiner Außenfläche 76 zum Aufnahmeschlitz 78 der Schraubmutter 102 hin gewölbt. Dies trifft auch bei der Rohlingsmutter 52 zur Bildung der Schraubmutter gemäß der dritten Ausführungsform 103 zu, jedoch ist hier zusätzlich der Ringkragen 64 und damit der Formkragen 74 der dritten Ausführungsform der Schraubmutter 103 an seiner Innenfläche 77 im Abschnitt 90 mit einem vom Aufnahmeschlitz 76 weg versetzten Flächenverlauf 92 versehen.

Bei der in Fig. 23 dargestellten Rohlingsmutter 52 zur Bildung der vierten Ausführungsform einer Schraubmutter 104 ist der Ringkragen 64 und damit der Formkragen 74 der Schraubmutter 104 sowohl an seiner Außenfläche 76 im umfänglich verlaufenden Abschnitt 90 mit einem zum Aufnahmeschlitz 78 hin versetzten Flächenverlauf 91 versehen als auch an seiner Innenfläche 77 im umfänglich verlaufenden Abschnitt 90 mit einem zum Aufnahmeschlitz 78 hin versetzten Flächenverlauf 92 versehen. Anders als bei der in Fig. 18 dargestellten ersten Ausführungsform einer Schraubmutter 101 sind jedoch die Flächenverläufe 91, 92 nicht parallel ausgestaltet, sondern der Flächenverlauf 92 ist stärker gekrümmt als der Flächenverlauf 91 - dies hat seine Ursache darin, dass die Flächenverläufe 91, 92 bei der ersten Ausführungsform der Schraubmutter 101 durch die Ausstülpungen 41 an der Stirnfläche 40 des Gehäuses 20 des Werkzeugs 200 erzeugt sind, während die Flächenverläufe 91, 92 der vierten Ausführungsform der Schraubmutter 104 durch entsprechend und auf den Zweck hin speziell ausgelegte Einprägungen im Ringkragen des Werkstückes 50 bzw. der Rohlingsmutter 52 gebildet sind, bzw. in einem Pressvorgang für die Mutter so vorgegeben sind. Dadurch kann sich im Randbereich der Abschnitte 90 eine Taillierung ergeben, wobei sich die Flächenverläufe 91, 92 am Nächsten kommen.

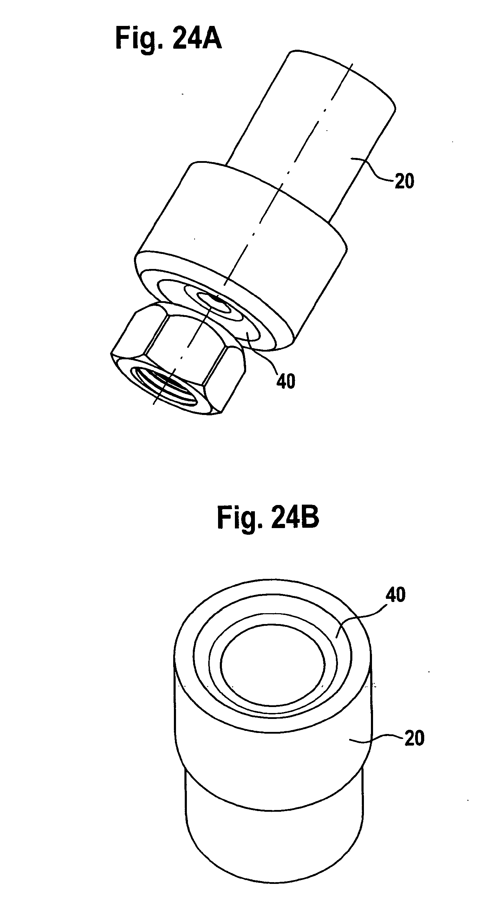

Solche und andere Ausführungsformen von Schraubmuttern 102, 103, 104 können mit einem in Fig. 24 der Einfachheit halber noch einmal dargestellten Werkzeug mit einem Gehäuse 20 wie es bereits anhand von Fig. 1, Fig. 4, Fig. 5 und Fig. 6 beschrieben worden ist behandelt werden. Ein solches Gehäuse 20 ist frei von Ausstülpungen an seiner Stirnfläche 40, welche die Funktion einer Aufsetzfläche für den Formkragen 74 hat. Des Weiteren wird zur Beschreibung des Gehäuses 20 auf die Beschreibung der Fig. 1, Fig. 4, Fig. 5 und Fig. 6 Bezug genommen. Das Werkzeug ist mit seinem Gehäuse 20 und der ausstülpungsfreien Stirnfläche 40 der Einfachheit halber noch einmal in den Ansichten A und B der Fig. 24 gezeigt.

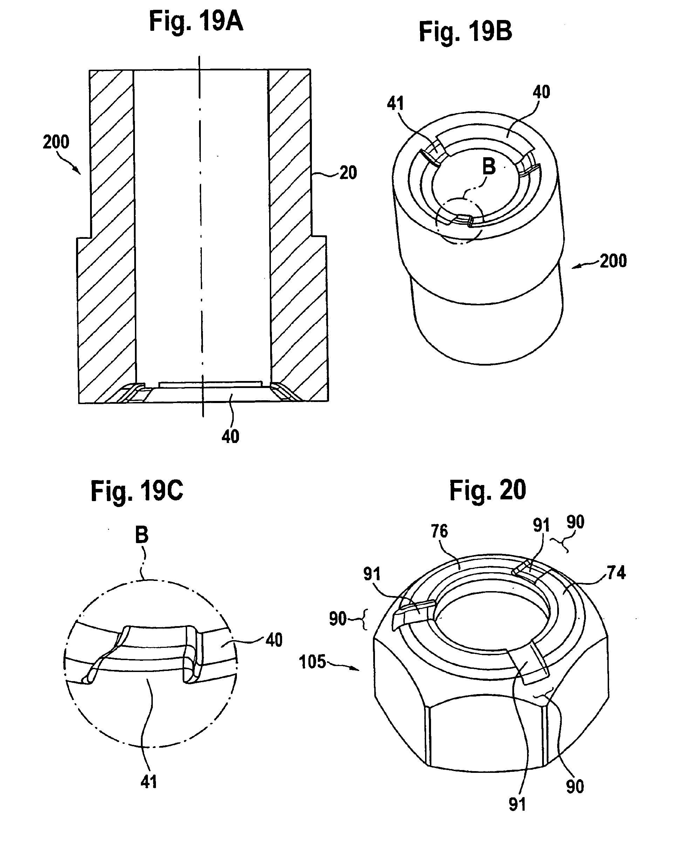

In der Fig. 20 ist perspektivisch eine fünfte Ausführungsform einer Schraubmutter 105, die aus einer zu Fig. 21, Fig. 22 und Fig. 23 abgewandelten Rohlingsmutter 52 hervorgegangen ist, gezeigt. Die Schraubmutter 105 weist einen Formkragen 74 auf, der in drei umfänglich verlaufenden Abschnitten 90 mit vorliegend eher nicht gewölbten, sondern vielmehr praktisch rechteckig versetzten Flächenverläufen 91 nur an seiner Außenfläche 76 versehen ist - ähnlich wie bei der zweiten Ausführungsform der Schraubmutter 102, dort aber gewölbten Flächenverläufen 91. Auch die bei der fünften Ausführungsform der Schraubmutter 105 vorgesehenen Flächenverläufe 91 an der Außenfläche 76 des Formkragens 74 führen zu einer verjüngten Wandstärke des Formkragens 74 im Bereich der umfänglich verlaufenden Abschnitte 90. Dies bietet ausreichenden Raum zur Aufnahme von überschüssigem Material bei dem achswärtigen Einbiegen des Ringkragens 64.

Zwischen der fünften Ausführungsform der Schraubmutter 105 und der ersten Ausführungsform der Schraubmutter 101 besteht der Unterschied, dass bei der ersten Ausführungsform der Schraubmutter 101 die Wandstärke des Formkragens 74 in Umfangsrichtung weitgehend gleich bleibt, während sich die Wandstärke bei der fünften Ausführungsform der Schraubmutter 105 - ähnlich wie bei den Schraubmuttern 102, 103, 104 - in den umfänglich verlaufenden Abschnitten 90 verjüngt. Die verjüngten Abschnitte 90 der fünften Ausführungsform der Schraubmutter 105 sind bereits im Ringkragen 64 der Rohlingsmutter 52 anzubringen und können nachfolgend wie in Ansicht A und Ansicht B der Fig. 24 gezeigt - durch ein anhand von Fig. 1, Fig. 4, Fig. 5 und Fig. 6 erläutertes Gehäuse 20 behandelt werden. D.h. der in den Abschnitten 90 verjüngte Ringkragen 64 kann achswärtig eingebogen werden zur Bildung des Formkragens 74 der fünften Ausführungsform der Schraubmutter 105.

Dagegen ist mit einem aus der Fig. 19 ersichtlichen Werkzeug - wie anhand von Fig. 18 ausführlich erläutert wurde - die Bildung des Ringkragens 64 der Rohlingsmutter 52 zur Bildung der ersten Ausführungsform der Schraubmutter 101 besonders einfach mit gleich bleibender Wandstärke des Ringkragens 64 möglich. Die anschließende achswärtigen Einbiegung des Ringkragens 64 erfolgt unter Benutzung der Stirnfläche 40 mit rechteckigen Ausstülpungen 41 am Gehäuse 20 des Werkzeugs 200 und führt zu einer Mutter, die auf der Außenseite des Kragens ähnlich der Mutter 105 rechteckige Abschnitte 90 mit Flächenverläufen 91 aufweist - dies jedoch bei gleichbleibender Wandstärke in Umfangsrichtung des Formkragens. Dadurch wird bei gleich bleibender Wandstärke des Formkragens 74 ein Flächenverlauf 91, 92 an der Außenseite 76 bzw. Innenseite 77 des Formkragens 74 zum Aufnahmeschlitz 78 hin versetzt oder, wie im vorliegenden Fall, rechteckig gewölbt.

Zusammenfassend wird eine Schraubmutter aus metallischem Werkstoff mit einer Gewindebohrung 62 und einer deren Längsachse E radial umlaufend zugeordneten Innennut 78 angegeben, bei der an eine der Stirnflächen 54 der Schraubmutter 70 ein Ringkragen 64 angeformt und querschnittlich so achswärts gebogen ist, dass er mit einem die Gewindebohrung 62 als Auflagefläche 55 umgebenden Abschnitt jener Stirnfläche einen dieser unmittelbar zugeordneten Aufnahmeschlitz 78 begrenzt und erfindungsgemäß der Formkragen 74 wenigstens an einer Oberfläche in wenigstens einem umfänglich verlaufenden Abschnitt einen relativ zur übrigen Oberfläche versetzten Flächenverlauf aufweist.

## Patentansprüche

1. Schraubmutter aus metallischem Werkstoff mit einer Gewindebohrung (62) und einer deren Längsachse (E) radial umlaufend zugeordneten Innennut (78), wobei an eine der Stirnflächen (54) der Schraubmutter (70) ein Ringkragen (64) angeformt und querschnittlich so achswärts gebogen ist, dass er mit einem die Gewindebohrung (62) als Auflagefläche (55) umgebenden Abschnitt jener Stirnfläche einen dieser unmittelbar zugeordneten Aufnahmeschlitz (78) begrenzt, wobei der querschnittlich verformte Ringkragen (64) einen Formkragen (74) mit einem dem Aufnahmeschlitz (78) benachbarten Stirnbereich (81) und einer Außenfläche (76) bildet und der Stirnbereich (81) ein gegenüber einem übrigen Innengewinde (60) der Gewindebohrung (62) versetztes Gewinde trägt,
**dadurch gekennzeichnet, dass**
der Formkragen (74) wenigstens an einer Oberfläche in wenigstens einem umfänglich verlaufenden Abschnitt einen relativ zur übrigen Oberfläche versetzten Flächenverlauf aufweist.

2. Schraubmutter (101, 102, 103, 104) nach Anspruch 1, **dadurch gekennzeichnet, dass**
der Stirnbereich (81) breiter als der anschließende Querschnitt des Formkragens (74) ist.

3. Schraubmutter (101, 102, 103, 104) nach Anspruch 1 oder 2, **dadurch gekennzeichnet, dass**
der Formkragen zu seiner Außenfläche (76) in wenigstens einem umfänglich verlaufenden Abschnitt einen relativ zur übrigen Außenfläche (76) versetzten Flächenverlauf aufweist.

4. Schraubmutter (101, 102, 103, 104) nach einem der Ansprüche 1 bis 3,
**dadurch gekennzeichnet, dass**
der Formkragen an seiner Innenfläche (77) in wenigstens einem umfänglich verlaufenden Abschnitt einen relativ zur Innenfläche (77) versetzten Flächenverlauf aufweist.

5. Schraubmutter (101, 102, 103, 104) nach einem der Ansprüche 1 bis 4,
**dadurch gekennzeichnet, dass**
der Flächenverlauf in dem wenigstens einen umfänglich verlaufenden Abschnitt der Oberfläche zum Aufnahmeschlitz (78) hin - und/oder weg - versetzt ist.

6. Schraubmutter (101, 102, 103, 104) nach einem der Ansprüche 1 bis 5,
**dadurch gekennzeichnet, dass**
der Flächenverlauf in dem wenigstens einen umfänglich verlaufenden Abschnitt der Oberfläche gewölbt ist.

7. Schraubmutter (101, 105) nach einem der Ansprüche 1 bis 6, **dadurch gekennzeichnet, dass**
die Wandstärke des Formkragens (74) in Umfangsrichtung gleichbleibend ist.

8. Schraubmutter (102, 103, 105) nach einem der Ansprüche 1 bis 6, **dadurch gekennzeichnet, dass** die Wandstärke des Formkragens (74) in Umfangsrichtung einen sich verändernden Verlauf hat.

9. Schraubmutter (101, 102, 103, 104) nach einem der Ansprüche 1 bis 8,
**dadurch gekennzeichnet, dass**
ein von Wandflächenabschnitten (56) bestimmter mehreckiger Grundriss vorgesehen ist.

10. Schraubmutter (101, 102, 104, 104) nach einem der Ansprüche 1 bis 9,
**dadurch gekennzeichnet, dass**
die Außenfläche (76) des Formkragens (74) in radialem Abstand (r) zu den achsparallelen Kanten (57) der Wandflächenabschnitte (56) der Schraubmutter (70) verläuft, wobei der Aufnahmeschlitz (78) nahe der Außenfläche des Formkragens angeordnet ist.

11. Schraubmutter (101, 102, 104, 104) nach einem der Ansprüche 1 bis 10, **gekennzeichnet durch** eine querschnittlich achswärts gekrümmte Außenfläche (76) des Formkragens (74).

12. Schraubmutter (101, 102, 104, 104) nach einem der Ansprüche 1 bis 11, **gekennzeichnet durch** eine querschnittlich achswärts gekrümmte Innenfläche des Formkragens (74).

13. Verfahren zum Herstellen einer Schraubmutter nach wenigstens einem der voranstehenden Ansprüche, wobei an einer Stirnfläche (54) einer dem Grundriss der Schraubmutter (70) entsprechenden Rohlingsmutter (52) ein Ringkragen (64) mit kreisförmiger freier Oberkante (66) angeformt und durch ein axial an letztere herangeführtes Druckwerkzeug (10) zur Längsachse (E) der Rohlingsmutter hin querschnittlich gekrümmt wird, **dadurch gekennzeichnet, dass** der Ringkragen (64) in einem Stirnbereich (81) verbreitert ist und/oder an seiner Oberkante (66) beim Verformen aufgestaucht wird (Fig. 6) und in einen axialen Lochkanal (58) und in den Stirnbereich (80) des gebogenen Formkragens (74) der Rohlingsmutter (52) ein Innengewinde (60) eingeformt wird und nach dem Einformen des Innengewindes (60) der Rand des Formkragens (74) zum Innengewinde hin versetzt wird.

14. Verfahren nach Anspruch 13, **dadurch gekennzeichnet, dass**
die freie Oberkante (66) des Ringkragens (64) umlaufend parallel an den benachbarten Innenbereich der Stirnfläche (54) der Rohlingsmutter (52) herangeführt und in Abstand zu diesem/dieser angeordnet wird.

15. Werkzeug zur Durchführung des Verfahrens nach einem der Ansprüche 13 oder 14, **dadurch gekennzeichnet, dass**
ein Führungskanal (16) eines Gehäuses (20) für einen Druckstempel (12) an einem von einem Ringrand (34) einer Werkzeugstirnfläche (40) gebildeten Aufnahmebereich für ein Werkstück (50) endet und der Druckstempel im Führungskanal axial verschiebbar lagert, wobei am Druckstempel das Gehäuse (20) dem Ringkragen (64) des Werkstücks zuführbar angeordnet ist.

## Claims

1. Threaded nut made of a metal material having a threaded hole (62) and an inner groove (78) which is arranged in a radial circumferential manner in relation to the longitudinal axis (E) thereof, a ring collar (64) being integrally formed on one of the end faces (54) of the threaded nut (70) and being bent towards the axis in cross-section in such a way that, together with a portion of the end face which surrounds the threaded hole (62) as a support surface (55), it delimits a recess groove (78) associated directly therewith, the ring collar (64) which is deformed in cross-section forming a mould collar (74) having an end region (81) adjacent to the recess grooves (78) and an outer surface (76), and the end region (81) carrying a thread which is offset from the rest of the inner thread (60) of the threaded hole (62), **characterised in that** the mould collar (74) has a surface curvature offset from the rest of the upper surface, at least on an upper surface in at least a portion which extends in a circumferential manner.

2. Threaded nut (101, 102, 103, 104) according to claim 1, **characterised in that** the end region (81) is wider than the adjacent cross-section of the mould collar (74).

3. Threaded nut (101, 102, 103, 104) according to either claim 1 or claim 2, **characterised in that** the mould collar has on its outer surface (76), in at least a portion which extends in a circumferential manner a surface curvature which is offset from the rest of the outer surface (76)

4. Threaded nut (101, 102, 103, 104) according to any one of claims 1 to 3, **characterised in that** the mould collar has on its inner surface (77), in at least a portion which extends in a circumferential manner, a surface curvature which is offset from the inner surface (77).

5. Threaded nut (101, 102, 103, 104) according to any one of claims 1 to 4, **characterised in that** the surface curvature in the at least a portion which extends in a circumferential manner of the upper surface is offset towards - and/or away from - the recess groove.

6. Threaded nut (101, 102, 103, 104) according to any one of claims 1 to 5, **characterised in that** the surface curvature in the at least a portion which extends in a circumferential manner of the upper surface is curved.

7. Threaded nut (101, 105) according to any one of claims 1 to 6, **characterised in that** the wall thickness of the mould collar (74) is constant in the circumferential direction.

8. Threaded nut (102, 103, 105) according to any one of claims 1 to 6, **characterised in that** the wall thickness of the mould collar (74) has a varying progression in the circumferential direction.

9. Threaded nut (101, 102, 103, 104) according to any one of claims 1 to 8, **characterised in that** a polygonal horizontal projection determined by wall surface portions (56) is provided.

10. Threaded nut (101, 102, 104, 104) according to any one of claims 1 to 9, **characterised in that** the outer surface (76) of the mould collar (74) extends at a radial distance (r) from the axial parallel edges (57) of the wall surface portions (56) of the threaded nut (70), the recess groove (78) being arranged near to the outer surface of the mould collar.

11. Threaded nut (101, 102, 104, 104) according to any one of claims 1 to 10, **characterised by** an outer surface (76) of the mould collar (74) which is curved towards the axis in cross-section.

12. Threaded nut (101, 102, 104, 104) according to any one of claims 1 to 11, **characterised by** an inner surface (77) of the mould collar (74) which is curved in towards the axis in cross-section.

13. Method for producing a threaded nut according to at least a of the preceding claims, a ring collar (64) having circular free upper edges (66) being integrally formed on an end face (54) of a blank nut (52) corresponding to the horizontal projection of the threaded nut (70) and being curved in cross-section towards the longitudinal axis (E) of the blank nut using a pressure tool (10) which is introduced axially onto said upper edges, **characterised in that** the ring collar (64) is widened in an end region (81) and/or is reshaped on its upper edge (66) during shaping (Fig. 6) and an inner thread (60) is formed in an axial channel hole (58) and in the end region (80) of the curved mould collar (74) of the blank nut (52) and after the formation of the inner thread (60) the edge of the mould collar (74) is offset towards the inner thread.

14. Method according to claim 13, **characterised in that** the free upper edges (66) of the ring collar (64) are brought towards the adjacent inner region of the end face (54) of the blank nut (52) in a circumferential parallel manner and are arranged at a distance therefrom.

15. Tool for carrying out the method according to either claim 13 or claim 14, **characterised in that** a guiding channel (16) of a housing (20) for a pressure piston (12) ends on a recess region for a workpiece (50) formed from a ring edge (34) of a tool end face (40) and the pressure piston is mounted in the guiding channel in an axially displaceable manner, the housing (20) being arranged on the pressure piston in such a way that it can be fed to the ring collar (64) of the workpiece.

## Revendications

1. Ecrou en matériau métallique avec un alésage fileté (62) et une rainure intérieure (78) associée en l'entourant radialement à son axe longitudinal (E), dans lequel un collet annulaire (64) est formé sur une des faces frontales (54) de l'écrou (70) et est courbé en section transversale en direction de l'axe, de telle manière qu'il délimite, avec une partie de cette face frontale entourant l'alésage fileté (62) comme face d'appui (55) une fente de réception (78) directement associée à celle-ci, dans lequel le collet annulaire (64) déformé en section transversale forme un collet profilé (74) avec une région frontale (81) proche de la fente de réception (78) et une face extérieure (76), et la région frontale (81) porte un filet décalé par rapport au reste du filet intérieur (60) de l'alésage fileté (62), **caractérisé en ce que** le collet profilé (74) présente sur une surface dans au moins une partie s'étendant en périphérie un tracé de surface décalé par rapport au reste de la surface.

2. Ecrou (101, 102, 103, 104) selon la revendication 1, **caractérisé en ce que** la région frontale (81) est plus large que la section transversale jointive du collet profilé (74).

3. Ecrou (101, 102, 103, 104) selon la revendication 1 ou 2, **caractérisé en ce que** le collet profilé présente vers sa face extérieure (76), dans au moins une partie s'étendant en périphérie, un tracé de surface décalé par rapport au reste de la face extérieure (76).

4. Ecrou (101, 102, 103, 104) selon l'une quelconque des revendications 1 à 3, **caractérisé en ce que** le collet profilé présente sur sa face intérieure (77), dans au moins une partie s'étendant en périphérie, un tracé de surface décalé par rapport à la face intérieure (77).

5. Ecrou (101, 102, 103, 104) selon l'une quelconque des revendications 1 à 4, **caractérisé en ce que** le tracé de surface est décalé vers et/ou partant de la fente de réception (78) dans ladite au moins une partie de la surface s'étendant en périphérie.

6. Ecrou (101, 102, 103, 104) selon l'une quelconque des revendications 1 à 5, **caractérisé en ce que** le tracé de surface est incurvé dans ladite au moins une partie de la surface s'étendant en périphérie.

7. Ecrou (101, 102, 103, 104) selon l'une quelconque des revendications 1 à 6, **caractérisé en ce que** l'épaisseur de paroi du collet profilé (74) reste constante en direction périphérique.

8. Ecrou (101, 102, 103, 104) selon l'une quelconque des revendications 1 à 6, **caractérisé en ce que** l'épaisseur de paroi du collet profilé (74) présente un tracé qui varie en direction périphérique.

9. Ecrou (101, 102, 103, 104) selon l'une quelconque des revendications 1 à 8, **caractérisé en ce qu'**il est prévu un contour de base polygonal déterminé par des parties de surface de paroi (56).

10. Ecrou (101, 102, 103, 104) selon l'une quelconque des revendications 1 à 9, **caractérisé en ce que** la surface extérieure (76) du collet profilé (74) s'étend à une distance radiale (r) des arêtes (57), parallèles à l'axe, des parties de surface de paroi (56) de l'écrou (70), dans lequel la fente de réception (78) est disposée près de la surface extérieure du collet profilé.

11. Ecrou (101, 102, 103, 104) selon l'une quelconque des revendications 1 à 10, **caractérisé par** une surface extérieure (76) du collet profilé (74) courbée vers l'axe dans la section transversale.

12. Ecrou (101, 102, 103, 104) selon l'une quelconque des revendications 1 à 11, **caractérisé par** une surface intérieure du collet profilé (74) courbée vers l'axe dans la section transversale.

13. Procédé de fabrication d'un écrou selon au moins une des revendications précédentes, dans lequel on forme sur une face frontale (54) d'un écrou brut (52) correspondant au contour de l'écrou (70) un collet annulaire (64) avec un côté supérieur circulaire libre (66) et on l'incurve en section transversale en direction de l'axe longitudinal (E) de l'écrou brut au moyen d'un outil de presse (10) amené axialement sur ce dernier, **caractérisé en ce que** le collet annulaire (64) est élargi dans une région frontale (81) et/ou il est refoulé avec son côté supérieur (66) lors de la déformation (Fig. 6) et on forme un filet intérieur (60) dans un canal du trou axial (58) et dans la région frontale (80) du collet profilé courbé (74) de l'écrou brut (52) et, après la formation du filet intérieur (60), on décale le bord du collet profilé (74) en direction du filet intérieur.

14. Procédé selon la revendication 13, **caractérisé en ce que** l'on amène le côté supérieur libre (66) du collet annulaire (64) en position périphériquement parallèle à la région intérieure adjacente de la surface intérieure (54) de l'écrou brut (52) et on le dispose à distance de celui-ci/celle-ci.

15. Outil pour la mise en oeuvre du procédé selon l'une quelconque des revendications 13 ou 14, **caractérisé en ce qu'u**n canal de guidage (16) d'un boîtier (20) pour un poinçon de pression (12) se termine à une région de réception pour une pièce (50) formée par un bord annulaire (34) d'une face frontale d'outil (40) et le poinçon de pression est monté de façon déplaçable axialement dans le canal de guidage, dans lequel le boîtier (20) est disposé sur le poinçon de pression de façon à pouvoir être envoyé sur le collet annulaire (64) de la pièce.
